# EUROPÄISCHE PATENTSCHRIFT

(11) **EP 4 368 866 B1**
(45) Veröffentlichungstag und Bekanntmachung des Hinweises auf die Patenterteilung: **04.06.2025**
(21) Anmeldenummer: 23208856.7
(22) Anmeldetag: 09.11.2023
(51) Int. Cl.: F16L 27/08, F16J 15/34

(54) **DREHDURCHFÜHRUNG MIT EINER GLEITRINGDICHTUNG**
ROTARY FEEDTHROUGH HAVING A SLIDE RING SEAL
PASSAGE TOURNANT DOTÉ D'UN JOINT D'ÉTANCHÉITÉ À BAGUE DE GLISSEMENT

(30) Priorität: 11.11.2022 DE 102022129880
(43) Veröffentlichungstag der Anmeldung: 15.05.2024
(73) Patentinhaber: Christian Maier GmbH & Co. KG, 89520 Heidenheim (DE)
(72) Erfinder: Schöferle, Manuel, 89079 Ulm (DE)
(74) Vertreter: Dr. Weitzel & Partner

(56) Entgegenhaltungen:
- EP-A1- 0 203 675
- EP-A1- 0 568 184
- US-B1- 6 386 595

## Beschreibung

Die vorliegende Erfindung betrifft eine Drehdurchführung mit einer Gleitringdichtung gemäß dem Oberbegriff von Anspruch 1.

Drehdurchführungen, wie sie vorliegende Erfindung betrifft, weisen einen Stator und einen Rotor auf, die jeweils wenigstens einen Fluidkanal umfassen. Zwischen dem Stator und dem Rotor ist eine Fluidübergabeschnittstelle vorgesehen, über welche ein Fluid aus dem Fluidkanal des Stators in den Fluidkanal des Rotors übergeben werden kann, beziehungsweise aus dem Fluidkanal des Rotors in den Fluidkanal des Stators übergeben werden kann. Das Fluid strömt somit vom Stator in den Rotor oder umgekehrt, wobei insbesondere auch eine Fluidübergabeschnittstelle zwischen jeweils mehreren Fluidkanälen im Stator und im Rotor vorgesehen sein kann, um einen Vorlauf und einen Rücklauf auszubilden. Auch mehr als zwei Fluidkanäle im Stator, die mit jeweils wenigstens einem Fluidkanal im Rotor verbunden sind, sind möglich.

Die Fluidübergabeschnittstelle ist mittels einer Gleitringdichtung gegenüber der Umgebung abgedichtet. Der Gleitring liegt dabei in einer Axialrichtung elastisch vorgespannt an wenigstens einem Gegenring an und bildet mit diesem eine Dichtfläche aus. Aufgrund der Relativdrehung zwischen dem Gleitring und dem Gegenring unterliegt der Gleitring einem Verschleiß. Durch den Verschleiß und die elastische Abstützung tritt zumindest in einem Teil der Drehdurchführung eine Axialverschiebung auf, also im Stator und/oder im Rotor. Bei einer Bauform verschiebt sich nur der Gleitring. Bei anderen Bauformen, wie sie die vorliegende Erfindung besonders betrifft, verschiebt sich ein radial äußerer Bereich des Stators und/oder des Rotors, insbesondere der gesamte Stator. Um eine verbleibende zuverlässige Betriebsdauer vorhersagen zu können, ist es wünschenswert, das Ausmaß des Verschleißes zu erfassen.

EP 3 698 073 B1 schlägt hierzu vor, neben einem Positionssensor zur Erfassung der Position des Gleitringes in der Axialrichtung einen Temperatursensor außerhalb der Fluidübergabeschnittstelle vorzusehen, somit auf einer dem Fluidkanal abgewandten Leckageseite der Dichtfläche zwischen dem Gleitring und dem Gegenring, wobei mit dem Temperatursensor die Temperatur eines über die Dichtfläche austretenden Leckagestromes erfasst wird. Der Positionssensor kann als Hall-Sensor ausgeführt sein, der mit einem am Gleitring befestigten Magneten zusammenarbeitet. Wenn sich der Magnet in der Axialrichtung bewegt, kann diese Bewegung mit dem Hall-Sensor erfasst werden.

DE 34 26 539 A1 offenbart ein Verfahren zur Überwachung des Abriebs der Abdichtflächen einer mechanischen Gleitringdichtung. Hierfür ist eine Sonde radial zum axial beweglichen Gleitringdichtungselement der Dichtung oder radial zu einem Teil, das sich mit dem Gleitringdichtungselement axial bewegt, vorgesehen, sodass ein Signal, das von der Oberfläche des Gleitringdichtungselements oder des Teils erzeugt wird und radial auswärts gerichtet ist, durch die Sonde aufgenommen werden kann. Die Ausbildung der Oberfläche des Gleitringdichtungselements oder des Teils ist derart, dass es einen Signalwechsel gibt, der den Abrieb auf den Abdichtflächen anzeigt, wenn sich das Gleitringdichtungselement relativ zur Sonde axial bewegt. Beispielsweise verändert sich der radiale Zwischenraum zwischen der Sonde und einer gegenüberliegenden zylindrischen Oberfläche, wenn sich das Gleitringdichtungselement oder das mit diesem verbundene Bauteil bei Auftreten von Dichtungsabrieb axial zur Sonde bewegt. Dadurch wird eine Änderung in dem von der Sonde gemessenen Signal erzeugt. Alternativ kann in dem Gleitringdichtungselement ein leitfähiger oder als Halbleiter ausgebildeter Einsatz eingesetzt sein, der bei maximalem Abrieb ein Signal in der Sonde erzeugt. Auch die Verwendung einer optischen Sonde ist möglich.

Ein ähnliches wie das zuvor genannte System wird in US 5 448 924 A oder EP 0 203 675 A offenbart.

Bei den vorgenannten Ausführungsformen ist nachteilig, dass die Sonde zum Messen des Axialversatzes zusätzlich zu einem in der Regel ohnehin vorhandenen Drehzahlsensor in der Drehdurchführung vorgesehen werden muss und somit ein entsprechend großer Bauraum für die Messvorrichtungen erforderlich ist.

WO 95/27213 A schlägt eine Vorrichtung zur Sensierung einer Drehbewegung und einer Axialverschiebung eines Körpers mit einem einzigen Sensor vor. Hierfür wird auf einem umlaufenden Bauteil eine durch den Sensor abtastbare Struktur aufgebracht, die eine axiale Verschiebung des Bauteils durch eine erste signifikante Änderung des Ausgangssignals des Sensors repräsentiert und eine Änderung der Drehzahl des Bauteils um seine Rotationsachse durch eine zweite signifikante Änderung des Ausgangssignals des Sensors repräsentiert. Die Struktur kann dabei die Form eines Dreiecks-, Sägezahn- oder ähnlichem Musters aufweisen. Der Sensor kann ein induktiver Sensor oder ein Hall-Sensor sein. Somit kann sowohl eine Drehzahlinformation als auch eine Information über die axiale Position des Bauteils aus diesem Signal abgelesen werden. Da sich das Muster kontinuierlich über den gesamten Umfang des Bauteils erstreckt, um die gewünschten Signaländerungen zu erzeugen, ist der Betrag der Signaländerung vergleichsweise gering, sodass der Sensor eine hohe Sensitivität aufweisen muss und dem Muster in der Radialrichtung sehr dicht gegenüberstehen muss. Es sind nur Abstände von wenigen zehntel Millimetern zulässig. Damit ist die Vorrichtung nur für umlaufende Bauteile, in der Regel nur mit kleinem Außendurchmesser, geeignet, die eine geringe Unwucht aufweisen und die nicht zum Taumeln um die Drehachse neigen. Zudem ist der Installationsaufwand beziehungsweise die Kalibrierung vergleichsweise aufwändig.

Der vorliegenden Erfindung liegt die Aufgabe zugrunde, eine Drehdurchführung mit einem verschleißenden Gleitring anzugeben, dessen Verschleiß im Betrieb der Drehdurchführung exakt bestimmt werden kann, wobei die Drehdurchführung ohne einen zusätzlich zu einem Drehzahlsensor vorgesehenen Axialversatzsensor auskommt.

Die erfindungsgemäße Aufgabe wird durch eine Drehdurchführung mit den Merkmalen von Anspruch 1 gelöst. Die abhängigen Ansprüche beschreiben vorteilhafte und besonders zweckmäßige Ausgestaltungen der Erfindung.

Die erfindungsgemäße Drehdurchführung weist einen Stator und einen Rotor auf, die jeweils einen Fluidkanal umfassen, wobei zwischen dem Stator und dem Rotor eine Fluidübergabeschnittstelle vorgesehen ist, über welche ein Fluid aus dem Fluidkanal im Stator in den Fluidkanal im Rotor oder umgekehrt strömt. Somit kann ein Fluid vom Stator in den Rotor übergeben werden, beispielsweise ein Kühlmedium oder eine Prozessflüssigkeit beziehungsweise ein Prozessgas oder dergleichen. Es können mehrere Fluidkanäle im Stator und Rotor vorgesehen sein, die über die Fluidübergabeschnittstelle miteinander verbunden sind, sodass mehrere Fluide getrennt voneinander über die Fluidübergabeschnittstelle zwischen dem Stator und Rotor ausgetauscht werden können. Beispielsweise sind in der Drehdurchführung ein Vorlauf und ein Rücklauf vorgesehen, sodass insbesondere ein Kühlmedium vom Stator in den Rotor übergeben werden kann, das nach Ausführung seiner Kühlfunktion im erwärmten Zustand wieder aus dem Rotor zurück in den Stator geführt wird.

In der Fluidübergabeschnittstelle ist eine Gleitringdichtung vorgesehen, die einen abrasiven Gleitring umfasst. Mit der Gleitringdichtung ist die Fluidübergabeschnittstelle gegenüber der Umgebung abgedichtet, sodass das Fluid nicht aus den Fluidkanälen entweichen kann. Der Gleitring liegt in einer Axialrichtung elastisch verspannt an wenigstens einem Gegenring an und bildet mit diesem Gegenring eine Dichtfläche aus.

Prinzipiell kann der Gleitring mit dem Rotor umlaufen und entsprechend drehfest am Rotor angeschlossen sein oder stationär vom Stator gehalten werden und damit nicht umlaufen. Gemäß einer weiteren Ausführungsform ist der Gleitring frei zwischen dem Rotor und dem Stator eingesetzt, sodass sein Umlaufen unbestimmt ist. Das bedeutet, es ist vor dem Betrieb der Drehdurchführung unbestimmt, ob und mit welcher Drehzahl der Gleitring umläuft. Insbesondere läuft der Gleitring nur zeitweise und/oder mit einer geringeren Drehzahl als der Rotor um. Für eine solche Ausführungsform ist die vorliegende Erfindung besonders geeignet.

Erfindungsgemäß ist eine Axialverschiebungserfassungsvorrichtung vorgesehen, die eingerichtet ist, bei einem Verschleiß des Gleitrings eine damit verbundene Axialverschiebung des Stators und/oder des Rotors zu erfassen. Es muss sich nicht der gesamte Rotor und/oder Stator verschieben, sondern gegebenenfalls nur ein Teil desselben/derselben. Die Axialverschiebungserfassungsvorrichtung umfasst einen Drehgeber, insbesondere radial außen, am Rotor und einen eine Position des Drehgebers erfassenden Sensor, der dem Drehgeber radial gegenübersteht. Der Drehgeber weist wenigstens eine diskrete Markierung oder mehrere in Umfangsrichtung mit Abstand zueinander und hintereinander angeordnete diskrete Markierungen auf, die auf einer radial äußeren Oberfläche des Rotors angeordnet ist/sind. Die wenigstens eine diskrete Markierung oder die mehreren mit Abstand zueinander angeordneten diskreten Markierungen variieren entlang der Axialrichtung in ihrer Erstreckung in Umfangsrichtung und/oder in verschiedenen Axialabschnitten des Rotors sind unterschiedliche Anzahlen von einzelnen diskreten Markierungen in Umfangsrichtung hintereinander vorgesehen.

Die wenigstens eine diskrete Markierung stellt somit ebenfalls eine durch den Sensor abtastbare Struktur derart dar, dass eine axiale Verschiebung des Rotors, das heißt zumindest des die Markierung tragenden Teils des Rotors, durch eine erste signifikante Änderung eines Ausgangssignals des Sensors repräsentiert wird und eine Änderung der Drehzahl des Rotors um seine Rotationsachse durch eine zweite signifikante Änderung des Ausgangssignals des Sensors repräsentiert wird. Beispielsweise weist die diskrete Markierung die Form eines Dreiecks auf, das insbesondere vollflächig ist. Bevorzugt erstreckt sich die Grundseite des Dreiecks in Umfangsrichtung des Rotors beziehungsweise in Drehrichtung des Rotors und die Höhe erstreckt sich in der Axialrichtung. Bei mehreren diskreten Markierungen können entsprechend mehrere solcher Dreiecke, insbesondere identische Dreiecke, in Umfangsrichtung mit Abstand zueinander am Rotor angeordnet sein.

Durch die erfindungsgemäße Ausgestaltung mit wenigstens einer diskreten Markierung ändert sich das Ausgangssignal des Sensors besonders signifikant, selbst wenn der Sensor, wie gemäß einer Ausführungsform der Erfindung vorgesehen ist, mit einem radialen Abstand beziehungsweise Radialspalt zum Drehgeber in der Radialrichtung von wenigstens 1 oder 2 mm, insbesondere von wenigstens 5 mm angeordnet ist. Dadurch wird eine gewisse Unwucht beziehungsweise ein gewisses Taumeln des Rotors im Betrieb der Drehdurchführung ermöglicht, wobei diese/dieses in der Praxis durchaus erforderlich sein kann.

Der Sensor erzeugt insbesondere ein Ein-Aus-Signal, wobei ein Signalwechsel jeweils immer dann eintritt, wenn eine diskrete Markierung in den Erfassungsbereich des Sensors eintritt und wenn diese diskrete Markierung wieder aus dem Erfassungsbereich des Sensors austritt.

Andere vorteilhafte Ausgestaltungen der diskreten Markierung umfassen Markierungen mit Stufen oder Rundungen, derart, dass sich die Erstreckung der einzelnen diskreten Markierung über dem Umfang ändert, jeweils im Verlauf der Markierung entlang der Axialrichtung.

Eine Variation der Umfangserstreckung der Markierung über deren Erstreckung entlang der Axialrichtung kann auch dadurch erreicht werden, dass in verschiedenen axialen Abschnitten eine unterschiedliche Anzahl einzelner diskreter Markierungen vorgesehen ist.

Um die Installation zu erleichtern, kann die Position des Sensors und/oder des wenigstens einen Drehgebers in Radialrichtung und/oder Axialrichtung einstellbar sein.

Gemäß einer Ausführungsform erstreckt sich der Drehgeber nur über einen Teil des Umfangs, insbesondere von weniger als 45° oder weniger als 10°. Der übrige Bereich des Umfangs ist somit frei von Markierungen, die vom Sensor erfasst werden. Dies ermöglicht eine besonders flexible und kostengünstige Anordnung des Drehgebers.

Bevorzugt umfasst der Stator ein Gehäuse mit wenigstens einem Fluideinlass und/oder Fluidauslass und der Sensor wird von einer am Gehäuse angeschlossenen Konsole getragen. Durch eine solche separat zum Gehäuse vorgesehene Konsole kann ein Wärmeeintrag aus dem Gehäuse, das durch das Fluid aufgeheizt wird, in den Sensor reduziert werden. Beispielsweise umfasst die Konsole einen den Sensor tragenden Blechstreifen, der bevorzugt verstellbar am Gehäuse angeschlossen ist. Damit wird Wärmeleitung aus dem Gehäuse zum Sensor reduziert und die Montage des Sensors vereinfacht.

Gemäß einer Ausführungsform ist zwischen der Konsole und dem Gehäuse eine Wärmeisolierung vorgesehen, beispielsweise in Form einer Isolationsschicht.

Der Drehgeber kann bevorzugt von einem am Rotor angeschlossenen Winkelblech gebildet werden, welches dann die wenigstens eine diskrete Markierung trägt oder aufweist. Die Markierung kann somit direkt in das Winkelblech eingebracht werden, durch dieses gebildet werden oder auch in einem zusätzliches am Winkelblech angeschlossenen Bauteil vorgesehen sein.

Der Anschluss des Drehgebers am Rotor mittels eines Winkelblechs oder auch eines anderen Zwischenbauteils kann ebenfalls den Wärmeeintrag aus dem Rotor in den Bereich des Sensors reduzieren und ermöglicht eine besonders leichte, gegebenenfalls auch nachträgliche Montage des Drehgebers. Beispielsweise kann der Drehgeber mittels eines Klemmflansches am Rotor angeschlossen sein. Ein solcher Klemmflansch umfasst beispielsweise einen insbesonders geschlitzten Innenring, der mit einem Außenring auf den Rotor gepresst wird. Die Kontaktflächen zwischen Innenring und Außenring können schräg zur Drehachse stehen, sodass ein axiales Verschieben des Außenrings das Verklemmen des Innenrings, der bevorzugt C-förmig ist, das heißt einen Spalt zwischen seinen Umfangsenden aufweist, auf dem Rotor bewirkt.

Selbstverständlich kann der Drehgeber auch anders am Rotor angeschlossen sein, beispielsweise als Schraubflansch auf einem Gewinde des Rotors oder durch eine andere Verschraubung oder einen stoffschlüssigen Anschluss. Weitere Ausgestaltungen sind möglich.

Bevorzugt ist eine Steuervorrichtung vorgesehen, welche vom Sensor in Abhängigkeit der aktuellen Umfangsposition der wenigstens einen Markierung erzeugte Signale verarbeitet, wobei die Steuervorrichtung und/oder der Sensor eine Abfolge von Ein-Aus-Signalen erzeugt, die wie zuvor dargestellt, jeweils mit dem Eintritt und dem Austritt einer Markierung in den Erfassungsbereich des Sensors erzeugt werden.

Gemäß einer Ausgestaltung der Erfindung bildet der Gleitring an seinen beiden zueinander entgegengesetzten Stirnseiten, das heißt axial, jeweils eine Dichtfläche mit jeweils einem Gegenring aus und ist gegenüber beiden Gegenringen in Umfangsrichtung verdrehbar. Somit kommt die vorliegende Erfindung sowohl bei Gleitringdichtungen in Betracht, deren Gleitring nur einseitig gegenüber einem Gegenring verdrehbar ist. Beispielsweise wird dabei der Gegenring vom Rotor ausgebildet oder läuft mit dem Rotor um und der Gleitring ist am Stator angeschlossen, insbesondere drehfest angeschlossen. Auch kann der Gleitring zusammen mit dem Rotor umlaufen und der Gegenring kann zum Beispiel drehfest am Stator angeschlossen sein oder durch diesen ausgebildet sein. Bei einem zweiseitig abdichtenden Gleitring kann dieser an einem Gegenring im Stator und an einem Gegenring im Rotor anliegen.

Die Erfindung soll nachfolgend anhand eines Ausführungsbeispiels und den Figuren exemplarisch beschrieben werden.

Es zeigen:
- Figur 1: ein Ausführungsbeispiel einer erfindungsgemäß ausgeführten Drehdurchführung in einem Axialschnitt;
- Figur 2: die Drehdurchführung aus der Figur 1 in einer seitlichen Ansicht mit am Rotor angeschlossenen umlaufenden Bauteil;
- Figur 3: eine isometrische Ansicht der Drehdurchführung aus der Figur 1;
- Figur 4: eine alternative Gestaltung eines möglichen Drehgebers.

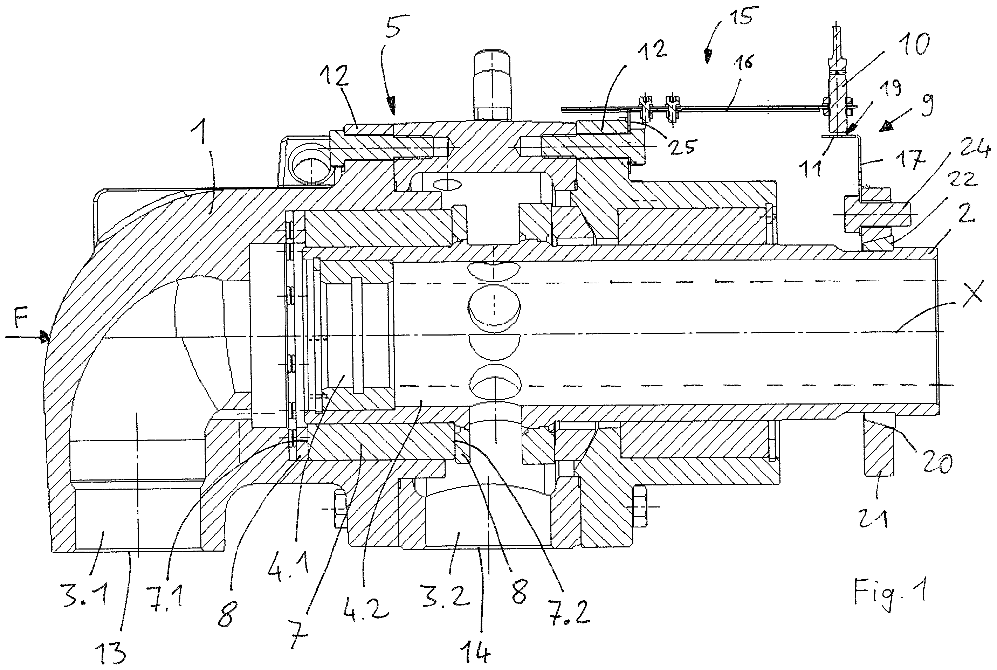

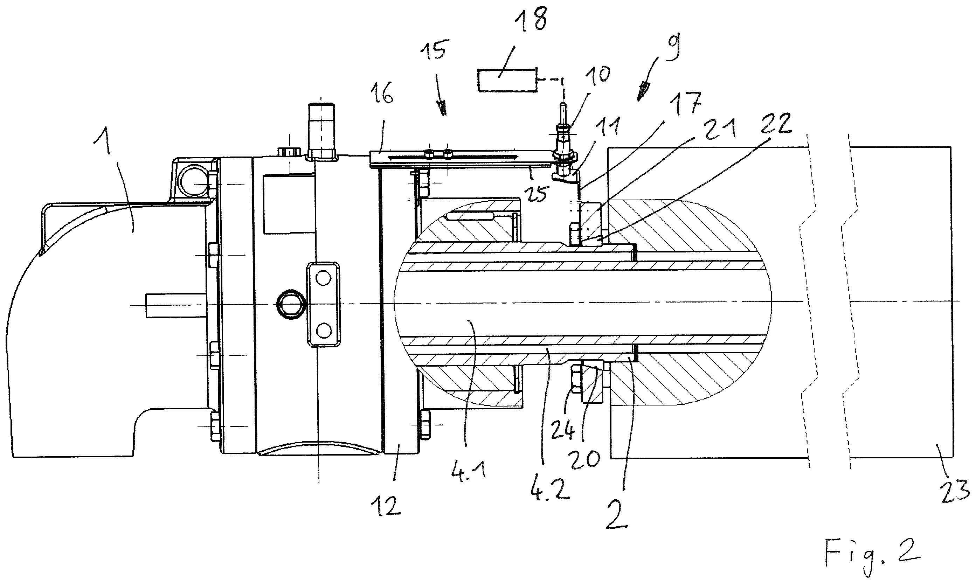

In der Figur 1 ist in einem Axialschnitt eine Drehdurchführung mit einem Stator 1 und einem Rotor 2 gezeigt. Im Stator 1 sind ein erster Fluidkanal 3.1 und zweiter Fluidkanal 3.2 vorgesehen, von denen einer zum Beispiel einen Vorlauf und der andere einen Rücklauf ausbildet. Auch im Rotor 2 sind entsprechend ein erster Fluidkanal 4.1 und ein zweiter Fluidkanal 4.2 vorgesehen, wobei deren Abdichtung gegeneinander nur aus der Figur 2 ersichtlich ist, da bei der Darstellung in der Figur 1 ein inneres Rohrstück noch nicht in den Rotor 2 eingesetzt ist. Das Rohrstück wird nur durch die Strichpunktlinie angedeutet.

Zwischen dem Stator 1 und dem Rotor 2 ist eine Fluidübergabeschnittstelle 5 vorgesehen, über welche Fluid aus dem ersten Fluidkanal 3.1 im Stator 1 in den ersten Fluidkanal 4.1 im Rotor 2 oder umgekehrt strömen kann und Fluid aus dem zweiten Fluidkanal 3.2 im Stator 1 in den zweiten Fluidkanal 4.2 im Rotor 2 oder umgekehrt strömen kann.

Die Fluidübergabeschnittstelle 5 ist mit einer Gleitringdichtung 6 abgedichtet, die einen Gleitring 7 umfasst, der in der Axialrichtung X, welche der Drehachse des Rotors 2 entspricht, elastisch vorgespannt an wenigstens einem Gegenring 8, hier an zwei Gegenringen 8, anliegt und mit diesem/diesen eine Dichtfläche ausbildet. Der Gleitring 7 weist somit vorteilhaft zwei axiale Stirnseiten 7.1, 7.2 an entgegengesetzten axialen Enden auf, die abdichtend an jeweils einem Gegenring 8 anliegen. Bei einer Relativverdrehung zwischen dem Gleitring 7 und einem oder beiden Gegenringen 8 tritt an diesen Stirnseiten 7.1, 7.2 ein Verschleiß auf. Um trotzdem ein abdichtendes Anliegen des Gleitrings 7 an den Gegenringen 8 zu ermöglichen, wird der Rotor 2 und/oder der Stator 1 in seiner Axialposition nachgeführt, sodass der Verschleiß kompensiert wird. Durch diese Nachführung, die durch eine elastische Vorspannung erreicht werden kann, siehe die in der Figur 1 eingezeichnete elastische Vorspannkraft F, verschiebt sich der Rotor 2 relativ zum Stator und/oder der Stator 1 relativ zum Rotor 2, aufgrund einer Axialbewegung des Rotors 2 und/oder des Stators 1.

Im gezeigten Ausführungsbeispiel ist ein Gegenring 8 insbesondere drehfest im Stator 1 angeordnet und der andere Gegenring 8 läuft mit dem Rotor 2 um.

Um die Relativbewegung in der Axialrichtung X zwischen dem Stator 1 und dem Rotor 2 und um zugleich die Drehzahl des Rotors 2 zu erfassen, sind ein Drehgeber 9 und ein Sensor 10 vorgesehen, die sich in Radialrichtung gegenüberstehen. Der Sensor 10 ist ortsfest am Stator 1, hier einem Gehäuse 12 des Stators 1, angeschlossen, welches einen Fluideinlass 13 in den ersten Fluidkanal 3.1 und einen Fluidauslass 14 aus dem zweiten Fluidkanal 3.2 ausbildet.

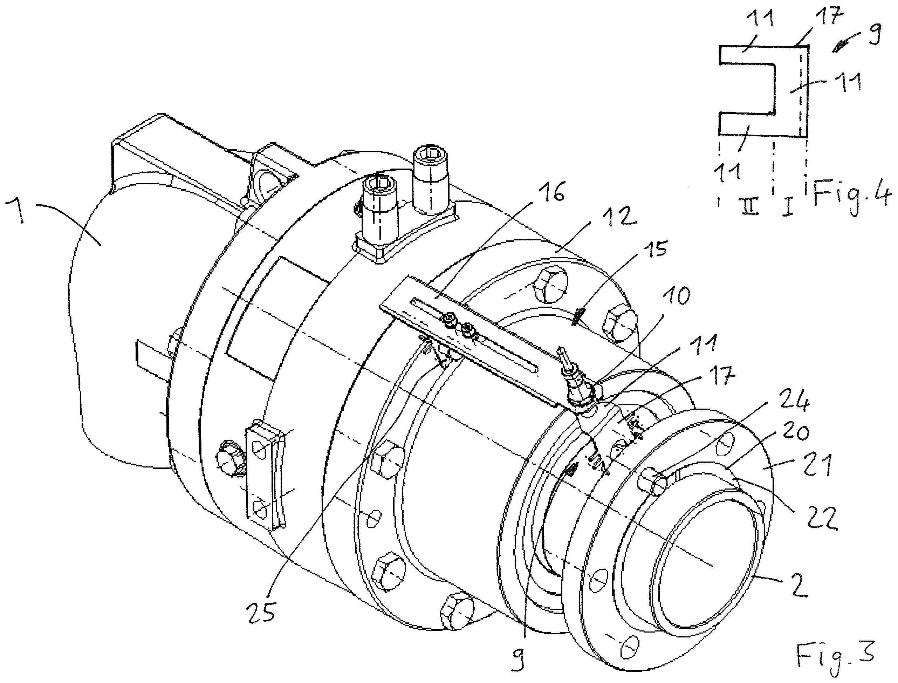

Der Sensor 10 wird über eine am Gehäuse 12 angeschlossene Konsole 15, die einen Blechstreifen 16 umfasst, in seiner vorgegebenen Position radial außerhalb des Drehgebers 9 gehalten, der durch ein am Rotor 2 angeschlossenes Winkelblech 17 gebildet wird, das beispielsweise eine einzige diskrete Markierung 11 trägt oder ausbildet. Ein bevorzugtes Ausführungsbeispiel für die diskrete Markierung 11 ist aus den Figuren 2 und 3 ersichtlich. Hier weist die diskrete Markierung 11 die Form eines Dreiecks auf, dessen Grundfläche sich in Umfangsrichtung des Rotors erstreckt und dessen Höhe sich in der Axialrichtung X erstreckt. Bevorzugt wird die diskrete Markierung 11 einfach durch ein abgewinkeltes Ende des Winkelblechs 17 gebildet. Dadurch ist eine besonders kostengünstige Herstellung möglich. Somit weist der Drehgeber 9 über dem Umfang nur eine einzige Markierung 11 auf und erstreckt sich in der Umfangsrichtung nur im Winkelbereich dieser Markierung 11.

Selbstverständlich können gemäß anderen Ausführungsformen auch mehrere Winkelbleche 17 oder ein Winkelblech 17 mit mehreren Armen vorgesehen sein, um dem Sensor 10 mehrere Markierungen 11 in der Radialrichtung gegenüberzustellen, die dann mit Abstand zueinander in der Umfangsrichtung hintereinander angeordnet sind. Auch kommen andere Ausgestaltungen des Drehgebers 9 beispielsweise in Form eines um die Umfangsrichtung umlaufenden Bundes und/oder Zylinders in Betracht, auf dem entsprechend wenigstens eine Markierung 11 oder mehrere Markierungen 11 vorgesehen sind.

Durch die Ausgestaltung einer diskreten Markierung 11 wird mit dem Sensor 10 oder einer angeschlossenen Steuervorrichtung 18 ein Ein-Aus-Signal erzeugt, und zwar auch dann, wenn der Radialspalt 19 zwischen dem Sensor 10 und dem Drehgeber 9 beziehungsweise der Markierung 11 vergleichsweise groß ist. Die Axialverschiebungserfassungsvorrichtung ist somit besonders robust und leicht kalibrierbar, sowie bevorzugt in der Position des Sensors 10 und/oder Drehgebers 9 in der Radialrichtung einstellbar.

Im gezeigten Ausführungsbeispiel, jedoch nicht zwingend, ist der Drehgeber 9 über eine Keilverbindung 20 am Rotor 2 angeschlossen. Hierfür sind ein äußerer Ring 21 und ein innerer Ring 22 vorgesehen, die in einem Axialschnitt schräg zur Axialrichtung X der Drehdurchführung ausgerichtete, aneinander anliegende Kontaktflächen aufweisen. Der innere Ring 22 könnte einteilig mit dem Rotor 2 ausgebildet sein, liegt bevorzugt jedoch in Richtung des am Rotor 2 angeschlossenen umlaufenden Bauteils 23, beispielsweise eine Walze, an einem Vorsprung im Rotor 2 an, sodass, wenn der äußere Ring 21 über eine entsprechende Verschraubung 24 gegen das Bauteil 23 gezogen wird, der gesamte Rotor 2 über die Keilverbindung 20 an das Bauteil 23 angezogen wird, um den Rotor 2 in einer gewünschten Position relativ zum Stator 1 zu positionieren. Wenn der innere Ring 22 geschlitzt ist, also eine C-Form aufweist, wird er beim Anziehen des äußeren Rings 21 gegen den Rotor 2 gezogen.

Das Bauteil 23 wird über die Drehdurchführung beziehungsweise die Fluidkanäle 3.1, 3.2, 4.1, 4.2 mit einem Fluid versorgt, beispielsweise gekühlt. Insbesondere handelt es sich bei dem Bauteil 23 um die Kalanderwalze einer Papiermaschine.

In der Figur 4 ist schematisch eine alternative Ausgestaltung eines Drehgebers 9 gezeigt, bei welchem in einzelnen axialen Abschnitten I, II eine unterschiedliche Anzahl von diskreten Markierungen 11 vorgesehen ist. Trotzdem kann der Drehgeber 9 aus einem einfachen Winkelblech 17 hergestellt werden, indem nämlich das dem hier nicht gezeigten Sensor 10 gegenüberstehende abgewinkelte Ende gabelförmig ist und somit in dem axialen Abschnitt I, der sich an den Radialarm des Winkelblechs 17 anschließt, eine einzige Markierung 11 ausgebildet wird und im Bereich des freien Endes des Winkelblechs 17 im Axialbereich II wenigstens zwei in Umfangsrichtung voneinander beabstandete einzelne Markierungen 11 ausgebildet werden. Selbstverständlich kann eine größere Anzahl von in Umfangsrichtung zueinander beabstandeten Markierungen 11 vorgesehen sein oder es können noch mehr Stufen und somit mehrere Axialabschnitte mit einer unterschiedlichen Anzahl von Markierungen 11 vorgesehen sein.

Im gezeigten Ausführungsbeispiel ist die Position des Sensors 10 flexibel einstellbar. So ist der Blechstreifen 16 der Konsole 15 gegenüber einem am Gehäuse 12 des Stators 1 angeschlossenen Winkel 25 in der Axialrichtung durch Lösen einer Verschraubung und erneutes Anziehen der Verschraubung verstellbar. Zudem kann der Winkel 25 und/oder auch das Winkelblech 17 des Drehgebers 9 in der Radialrichtung verstellbar am Gehäuse 12 beziehungsweise Rotor 2 angeschlossen sein und/oder der Sensor 10 in Radialrichtung verstellbar an der Konsole 15, insbesondere dem Blechstreifen 16, angeschlossen sein.

### Bezugszeichenliste

- 1: Stator
- 2: Rotor
- 3.1: Fluidkanal
- 3.2: Fluidkanal
- 4.1: Fluidkanal
- 4.2: Fluidkanal
- 5: Fluidübergabeschnittstelle
- 6: Gleitringdichtung
- 7: Gleitring
- 7.1: Stirnseite
- 7.2: Stirnseite
- 8: Gegenring
- 9: Drehgeber
- 10: Sensor
- 11: Markierung
- 12: Gehäuse
- 13: Fluideinlass
- 14: Fluidauslass
- 15: Konsole
- 16: Blechstreifen
- 17: Winkelblech
- 18: Steuervorrichtung
- 19: Radialspalt
- 20: Keilverbindung
- 21: äußerer Ring
- 22: innerer Ring
- 23: Bauteil
- 24: Verschraubung
- 25: Winkel
- X: Axialrichtung
- F: Vorspannkraft

## Patentansprüche

1. Drehdurchführung
mit einem Stator (1) und einem Rotor (2), die jeweils wenigstens einen Fluidkanal (3.1, 3.2, 4.1, 4.2) aufweisen;
mit einer Fluidübergabeschnittstelle (5) zwischen dem Stator (1) und dem Rotor (2), über welche ein Fluid aus dem Fluidkanal (3.1, 3.2) im Stator (1) in den Fluidkanal (4.1, 4.2) im Rotor (2) oder umgekehrt strömt, wobei die Fluidübergabeschnittstelle (5) mittels einer Gleitringdichtung (6), umfassend einen abrasiven Gleitring (7), gegenüber der Umgebung abgedichtet ist, und der Gleitring (7) in einer Axialrichtung (X) elastisch vorgespannt an wenigstens einem Gegenring (8) anliegt und mit diesem eine Dichtfläche ausbildet;
**dadurch gekennzeichnet, dass**
eine Axialverschiebungserfassungsvorrichtung vorgesehen ist, die eingerichtet ist bei einem Verschleiß des Gleitrings (7) eine damit verbundene Axialverschiebung des Stators (1) und/oder des Rotors (2) zu erfassen, wobei
die Axialverschiebungserfassungsvorrichtung einen Drehgeber (9) am Rotor (2) und einen eine Position des Drehgebers (9) erfassenden Sensor (10) umfasst, der dem Drehgeber (9) radial gegenübersteht, und
der Drehgeber (9) wenigstens eine diskrete Markierung (11) oder mehrere in Umfangsrichtung mit Abstand zueinander, hintereinander angeordnete diskrete Markierungen (11) umfasst, die am Rotor (2) angeordnet ist/sind, und die wenigstens eine diskrete Markierung (11) entlang der Axialrichtung (X) in ihrer Erstreckung in Umfangsrichtung variiert und/oder in verschiedenen Axialabschnitten des Rotors (2) unterschiedliche Anzahlen von einzelnen diskreten Markierungen in Umfangsrichtung hintereinander vorgesehen sind.

2. Drehdurchführung gemäß Anspruch 1, **dadurch gekennzeichnet, dass** die Position des Sensors (10) und/oder des wenigstens einen Drehgebers (9) in Radialrichtung und/oder Axialrichtung einstellbar ist.

3. Drehdurchführung gemäß einem der Ansprüche 1 oder 2, **dadurch gekennzeichnet, dass** sich der Drehgeber (9) nur über einen Teil des Umfangs erstreckt, insbesondere von weniger als 45° oder weniger als 10°.

4. Drehdurchführung gemäß einem der Ansprüche 1 bis 3, **dadurch gekennzeichnet, dass** der Stator (1) ein Gehäuse (12) mit wenigstens einem Fluideinlass (13) und/oder Fluidauslass (14) umfasst und der Sensor (10) von einer am Gehäuse (12) angeschlossenen Konsole (15) getragen wird.

5. Drehdurchführung gemäß Anspruch 4, **dadurch gekennzeichnet, dass** die Konsole (15) einen den Sensor (10) tragenden Blechstreifen (16) umfasst.

6. Drehdurchführung gemäß einem der Ansprüche 1 bis 5, **dadurch gekennzeichnet, dass** der Drehgeber (9) von einem am Rotor (2) angeschlossenen Winkelblech (17) gebildet wird.

7. Drehdurchführung gemäß einem der Ansprüche 1 bis 6, **dadurch gekennzeichnet, dass** eine Steuervorrichtung (18) vorgesehen ist, welche vom Sensor (10) in Abhängigkeit der aktuellen Umfangsposition der wenigstens einen Markierung (11) erzeugte Signale verarbeitet, wobei die Steuervorrichtung (18) und/oder der Sensor (10) eine Abfolge von Ein-Aus-Signalen erzeugt.

8. Drehdurchführung gemäß einem der Ansprüche 1 bis 7, **dadurch gekennzeichnet, dass** ein Radialspalt (19) zwischen den Drehgeber (9) und dem Sensor (10) wenigstens 1 oder 2 mm beträgt, insbesondere wenigstens 5 mm.

9. Drehdurchführung gemäß einem der Ansprüche 1 bis 8, **dadurch gekennzeichnet, dass** der Gleitring (7) an seinen zwei zueinander entgegengesetzten Stirnseiten (7.1, 7.2) jeweils eine Dichtfläche mit jeweils einem Gegenring (8) ausbildet und gegenüber beiden Gegenringen (8) in Umfangsrichtung verdrehbar ist.

10. Drehdurchführung gemäß einem der Ansprüche 1 bis 9, **dadurch gekennzeichnet, dass** die wenigstens eine diskrete Markierung (11) eine Dreiecksform aufweist.

## Claims

1. Rotary feedthrough
having a stator (1) and a rotor (2), which each have at least one fluid channel (3.1, 3.2, 4.1, 4.2);
having a fluid transfer interface (5) between the stator (1) and the rotor (2), via which a fluid flows out of the fluid channel (3.1, 3.2) in the stator (1) into the fluid channel (4.1, 4.2) in the rotor (2) or vice versa, wherein the fluid transfer interface (5) is sealed off from the environment by means of a face seal (6) comprising an abrasive sliding ring (7), and the sliding ring (7), elastically pretensioned in an axial direction (X), rests against at least one counter-ring (8) and forms a sealing surface with the latter;
**characterized in that**
an axial displacement detection device is provided which is set up to detect, when the sliding ring (7) is worn, an associated axial displacement of the stator (1) and/or of the rotor (2), wherein
the axial displacement detection device comprises a rotary encoder (9) on the rotor (2) and a sensor (10) that detects a position of the rotary encoder (9) and is radially opposite the rotary encoder (9), and the rotary encoder (9) comprises at least one discrete marking (11) or a plurality of discrete markings (11) spaced apart from one another in the circumferential direction and arranged successively on the rotor (2), and the at least one discrete marking (11) varies in its extension in the circumferential direction along the axial direction (X) and/or different numbers of individual discrete markings are provided in succession in the circumferential direction in different axial sections of the rotor (2).

2. Rotary feedthrough according to claim 1, **characterized in that** the position of the sensor (10) and/or of the at least one rotary encoder (9) can be adjusted in the radial direction and/or axial direction.

3. Rotary feedthrough according to one of claims 1 or 2, **characterized in that** the rotary encoder (9) extends only over part of the circumference, in particular less than 45° or less than 10°.

4. Rotary feedthrough according to one of claims 1 to 3, **characterized in that** the stator (1) comprises a housing (12) having at least one fluid inlet (13) and/or fluid outlet (14), and the sensor (10) is carried by a bracket (15) connected to the housing (12).

5. Rotary feedthrough according to claim 4, **characterized in that** the bracket (15) comprises a sheet-metal strip (16) which carries the sensor (10).

6. Rotary feedthrough according to one of claims 1 to 5, **characterized in that** the rotary encoder (9) is formed by an angled metal sheet (17) which is connected to the rotor (2).

7. Rotary feedthrough according to one of claims 1 to 6, **characterized in that** a control device (18) is provided which processes signals generated by the sensor (10) as a function of the current circumferential position of the at least one marking (11), wherein the control device (18) and/or the sensor (10) generates a sequence of on-off signals.

8. Rotary feedthrough according to one of claims 1 to 7, **characterized in that** a radial gap (19) between the rotary encoder (9) and the sensor (10) is at least 1 or 2 mm, in particular at least 5 mm.

9. Rotary feedthrough according to one of claims 1 to 8, **characterized in that** the sliding ring (7) forms a sealing surface with a counter-ring (8) on each of its two mutually opposing end sides (7.1, 7.2) and can be rotated in the circumferential direction with respect to the two counter-rings (8).

10. Rotary feedthrough according to one of claims 1 to 9, **characterized in that** the at least one discrete marking (11) has a triangular shape.

## Revendications

1. Traversée rotative avec un stator (1) et un rotor (2) qui possèdent chacun au moins un conduit de fluide (3.1, 3.2, 4.1, 4.2) ;
avec une interface de transfert de fluide (5) entre le stator (1) et le rotor (2), par laquelle un fluide s'écoule hors du conduit de fluide (3.1, 3.2) du stator (1) dans le conduit de fluide (4.1, 4.2) du rotor (2) ou vice versa, l'interface de transfert de fluide (5) étant rendue étanche vis-à-vis de l'environnement au moyen d'une garniture d'étanchéité mécanique (6) comprenant une bague glissante abrasive (7) et la bague glissante (7) est précontrainte de façon élastique dans un sens axial (X) et repose sur au moins une contre-bague (8) en formant avec celle-ci une surface d'étanchéité ;
**caractérisée en ce qu'**il est prévu un dispositif de détection du décalage axial qui est configuré pour détecter, quand la bague glissante (7) est usée, un décalage axial du stator (1) et/ou du rotor (2) associé à cette usure,
le dispositif de détection du décalage axial comprenant l'indicateur de rotation (9) sur le rotor (2) et un capteur (10) détectant une position de l'indicateur de rotation (9) qui se trouve en face de l'indicateur de rotation (9) dans le sens radial, et l'indicateur de rotation (9) comprenant au moins un marquage discret (11) ou plusieurs marquages discrets (11) disposés les uns à la suite des autres, à distance les uns des autres dans le sens de la circonférence, qui sont disposés sur le rotor (2), et l'au moins un marquage discret (11) ayant une étendue dans le sens de la circonférence qui varie dans le sens axial (X) et/ou des nombres différents de marquages discrets séparés étant prévus à la suite les uns des autres dans le sens de la circonférence dans des sections axiales différentes du rotor (2).

2. Traversée rotative selon la revendication 1, **caractérisée en ce que** la position du capteur (10) et/ou de l'au moins un indicateur de rotation (9) est ajustable dans le sens radial et/ou dans le sens axial.

3. Traversée rotative selon l'une des revendications 1 ou 2, **caractérisée en ce que** l'indicateur de rotation (9) ne s'étend que sur une partie de la circonférence, en particulier sur moins de 45° ou moins de 10°.

4. Traversée rotative selon l'une des revendications 1 bis 3, **caractérisée en ce que** le stator (1) comprend un corps (12) avec au moins une entrée de fluide (13) et/ou sortie de fluide (14) et le capteur (10) est porté par une console (15) raccordée au corps (12).

5. Traversée rotative selon la revendication 4, **caractérisée en ce que** la console (15) comprend une bande de tôle (16) portant le capteur (10).

6. Traversée rotative selon l'une des revendications 1 à 5, **caractérisée en ce que** l'indicateur de rotation (9) est formé par une tôle angulaire (17) raccordée au rotor (2).

7. Traversée rotative selon l'une des revendications 1 à 6, **caractérisée en ce qu'**il est prévu un dispositif de commande (18) qui traite des signaux produits par le capteur (10) en fonction de la position instantanée de l'au moins un marquage (11) sur la circonférence, le dispositif de commande (18) et/ou le capteur (10) générant une succession de signaux d'entrée et de sortie.

8. Traversée rotative selon l'une des revendications 1 à 7, **caractérisée en ce qu'**un interstice radial (19) entre l'indicateur de rotation (9) et le capteur (10) mesure au moins 1 ou 2 mm, en particulier au moins de 5 mm.

9. Traversée rotative selon l'une des revendications 1 à 8, **caractérisée en ce que** la bague glissante (7) forme sur chacune de ses deux faces frontales (7.1, 7.2) opposées l'une à l'autre une surface d'étanchéité avec une contre-bague (8) respective et peut tourner dans le sens de la circonférence par rapport aux deux contre-bagues (8).

10. Traversée rotative selon l'une des revendications 1 à 9, **caractérisée en ce que** l'au moins un marquage discret (11) a une forme triangulaire.
